# EUROPÄISCHE PATENTSCHRIFT

(11) **EP 3 384 251 B1**
(45) Veröffentlichungstag und Bekanntmachung des Hinweises auf die Patenterteilung: **01.12.2021**
(21) Anmeldenummer: 16788492.3
(22) Anmeldetag: 26.10.2016
(51) Int. Cl.: G01F 23/38

(54) **BEHÄLTER MIT FÜLLSTANDSGEBER**
CONTAINER WITH LEVEL INDICATOR
RÉCIPIENT AVEC INDICATEUR DE NIVEAU

(30) Priorität: 02.12.2015 DE 102015224047
(43) Veröffentlichungstag der Anmeldung: 10.10.2018
(73) Patentinhaber: TI Automotive Technology Center GmbH, 76437 Rastatt (DE)
(72) Erfinder: BOECKER, Albert J., 76275 Ettlingen (DE); GMÜND, Patrick, 76149 Karlsruhe (DE); MICHAELIS, Gerrit, 76448 Durmersheim (DE); SCHAEFER, Thorsten, 76829 Landau Landau (DE)
(74) Vertreter: Gauss, Nikolai
(86) Internationale Anmeldenummer: PCT/EP2016/075747
(87) Internationale Veröffentlichungsnummer: WO 2017/092935

(56) Entgegenhaltungen:
- WO-A1-88/01046
- DE-A1-102005 062 775
- DE-A1-102007 000 570
- DE-B3- 10 360 406
- DE-T2- 69 720 116
- DE-T2- 69 720 116
- GB-A- 2 410 557
- US-A1- 2007 090 832
- US-A1- 2011 000 297

## Beschreibung

Die Erfindung betrifft ein System mit einem Behälter, insbesondere Kunststoff-Kraftstoffbehälter, und einem Füllstandsgeber, der einen über einen Hebelarm an einem drehbar gelagerten Träger angeordneten Schwimmkörper und einen an dem Träger auf dessen Drehachse angeordneten, bei einer durch den Schwimmkörper verursachten Drehung des Trägers sich mit diesem drehenden Magnet sowie einen in fester Lage gegenüber dem Magnet angeordneten Hallsensor zur Erfassung einer sich bei Drehung des Magnets verändernden Feldstärke als Maß für den Füllstand in dem Behälter aufweist. Die Erfindung betrifft weiterhin einen entsprechenden Füllstandsgeber.

Bei Behältern für Flüssigkeiten, insbesondere bei Kraftstoffbehältern, besteht oft das Bedürfnis, Informationen über den jeweiligen Füllstand zu erhalten. Eine weit verbreitete Maßnahme um dies zu erreichen besteht darin, im Inneren des Behälters einen Füllstandsgeber anzuordnen, wobei eine Bauart von Füllstandsgeber einen Schwimmkörper aufweist, der an einem Ende eines drehbar gelagerten Hebelarms befestigt ist. Auf der Drehachse des Hebelarms oder eines den Hebelarm tragenden Trägers ist ein Magnet, beispielsweise ein zylindrischer Scheibenmagnet, angeordnet, der proportional zu einem steigenden oder fallenden Flüssigkeitspegel verdreht wird. Dem Magnet gegenüberliegend ist in fester Orientierung ein Hallsensor angeordnet, der bei der Drehung des Magnets einem sich ändernden Magnetfeld ausgesetzt ist und dies in ein elektrisches Signal als Maß für den Füllstand in dem Behälter umsetzt. Die bekannten Füllstandsgeber dieser Bauart sind vollständig im Inneren des Behälters angeordnet und daher bei einer Fehlfunktion nur schwer zugänglich. Zudem bildet der Hallsensor meist auch eine Baueinheit mit der Schwimmkörpermechanik und lässt sich nicht separat ersetzen.

Ein gattungsgemäßer Behälter mit einer Hallsensoranordnung ist aus der DE103 60 406 B3 bekannt. Bei diesem Behälter ist der Hallsensor jedoch im Innenraum des Behälters angeordnet und nur durch eine Behälteröffnung von außen her zugänglich.

Ausgehend hiervon besteht die Aufgabe der vorliegenden Erfindung darin, ein System der eingangs genannten Art bereitzustellen, bei dem der Füllstandsgeber unabhängig von weiteren in dem Behälter angeordneten Komponenten positionierbar ist und keiner eigenständigen Behälteröffnung bedarf.

Zur Lösung dieser Aufgabe wird die im Patentanspruch 8 angegebene Merkmalskombination vorgeschlagen. Vorteilhafte Ausgestaltungen und Weiterbildungen der Erfindung ergeben sich aus den abhängigen Ansprüchen.

Der Grundgedanke der Erfindung besteht darin, den elektronischen Teil und den mechanischen Teil des Füllstandsgebers voneinander zu trennen und jeweils im Bereich der Behälterwandung anzuordnen. Gemäß der Erfindung ist der Hallsensor daher an einem von der Außenseite des Behälters her montierbaren Sensorträger angeordnet.

Gemäß der Erfindung weist die Wandung des Behälters zudem eine Befestigungskontur für einen behälterinnenseitig angeordneten Trägeradapter für den Hebelarm des Schwimmkörpers und einen behälteraußenseitig angeordneten Sensoradapter für den Sensorträger auf.

Vorteilhaft ist der Trägeradapter für den Hebelarm des Schwimmkörpers mit einer Randpartie in einer Hinterschnittpartie der Wandung des Behälters angeordnet, die mittels einer Schieberanordnung einer Blasform hergestellt ist.

Der Sensoradapter lässt sich besonders vorteilhaft an dem Behälter anordnen, wenn eine behälteraußenseitige Komplementärpartie zu der Hinterschnittpartie eine Rastkontur für eine Montagepartie des Sensoradapters bildet.

Alternativ zu einer rastbaren Verbindung des Sensoradapters an der Wandung kann der Sensoradapter auch als Einlegeteil für eine Blasform ausgebildet sein, das bei der Behälterformung umblasen wird.

Zur Lagesicherung des Sensors kann der Sensoradapter ein mit einer an der Wandung des Behälters angeordneten Struktur zusammen wirkendes Verdrehsicherungsorgan aufweisen.

Entsprechend kann der Trägeradapter mindestens ein mit der Wandung des Behälters zusammen wirkendes Verdrehsicherungselement aufweisen, so dass die Lage des Magneten gegenüber dem Sensor gesichert ist. Dies kann beispielsweise dadurch erfolgen, dass der Trägeradapter eine Mehrzahl stirnseitig angeordneter Rippen aufweist, die bei der Montage des Trägeradapters an der Wandung des Behälters in das noch fließweiche Material der Wandung eingedrückt werden.

Weiterhin kann der Sensoradapter eine Zentralpartie zur Aufnahme des Sensorträgers aufweisen, die über eine Mehrzahl elastischer Verbindungsteile mit der Montagepartie verbunden ist. Die elastischen Verbindungsteile sind im Sinne einer Feder in Richtung der Wandung vorgespannt und drücken die Zentralpartie des Sensoradapters gegen die Wandung, um eine sichere Positionierung des Hallsensors gegenüber dem auf der anderen Seite der Wandung angeordneten Magnet zu bewirken.

Im Folgenden wird die Erfindung anhand eines in der Zeichnung in schematischer Weise dargestellten Ausführungsbeispiels näher erläutert. Es zeigen
- Fig. 1a: und b ein Ausführungsbeispiel eines an einer Behälterwandung angeordneten Füllstandsgebers in perspektivischer Schnittansicht;
- Fig. 2a: und b einen Sensoradapter und einen Trägeradapter des Füllstandsgebers gemäß Fig. 1; und
- Fig. 3: eine Explosionsdarstellung des Füllstandsgebers gemäß Fig. 1.

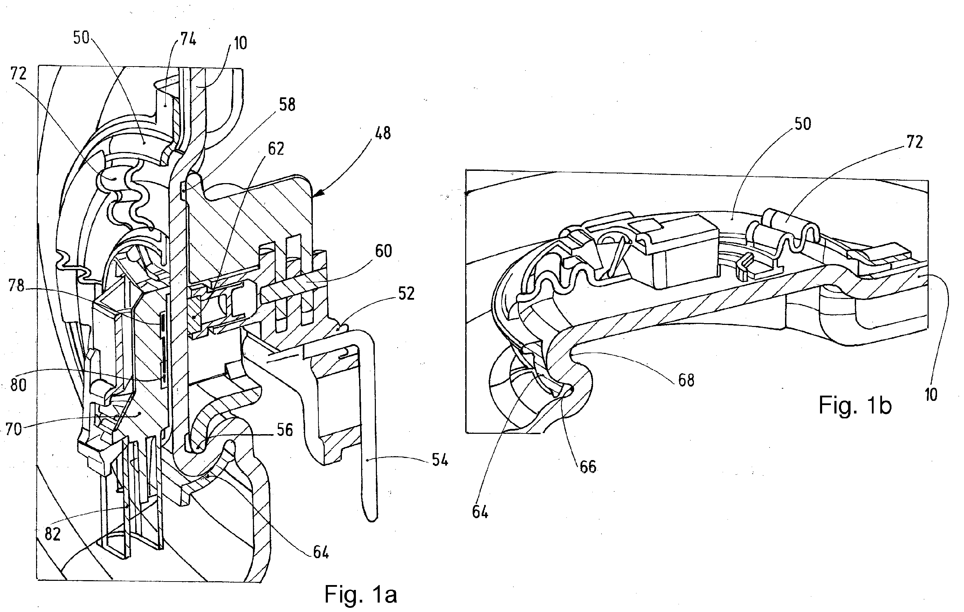

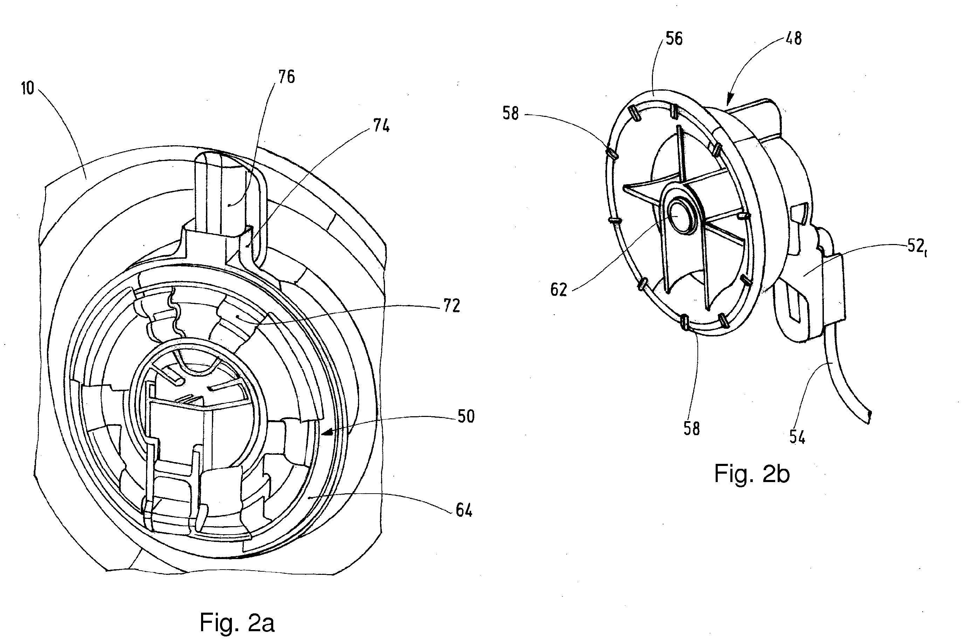

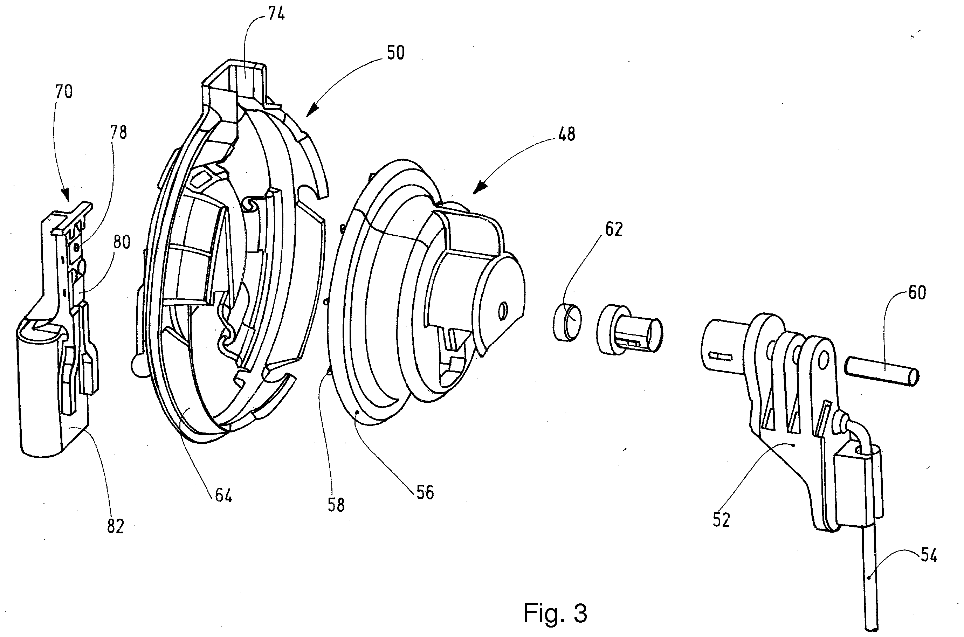

Eine Ausführungsform des Füllstandsgebers ist in den Fig. 1 bis 3 dargestellt. Der Füllstandsgeber kann sowohl an einer Seitenpartie (Fig. 1a) oder einer Oberpartie (Fig. 1b) der Wandung 10 des Behälters angeordnet werden.

Ein besonderer Vorteil dieser Ausführungsform besteht darin, dass die Wandung 10 des Behälters für die Montage des Füllstandsgebers nicht durchbrochen werden muss, die Barriere gegen ein Austreten von Flüssigkeit oder Dämpfen also unverletzt bleibt, was insbesondere bei einem Kraftstoffbehälter wichtig ist.

Der Füllstandsgeber umfasst einen im Inneren des Behälters angeordneten Trägeradapter 48 und einen auf der Außenseite des Behälters angeordneten Sensoradapter 50, sowie einen Träger 52 für den Hebelarm 54 eines nicht näher dargestellten Schwimmkörpers. Zur Montage der zwei Adapter 48, 50 an der Wandung 10 wird diese, beispielsweise in einer Blasform zur Herstellung des Behälters, mit einer Struktur versehen, die einen sicheren Halt der Adapter 48, 50 an der Wandung 10 ermöglicht.

Der Trägeradapter 48 weist an seiner der Wandung 10 zugewandten Seite einen Flanschrand 56 auf, mit dem der Trägeradapter 48 in Anlage mit der Innenseite der Wandung 10 gebracht wird, beispielsweise durch einen Manipulator in einer Blasform. Die Wandung 10 wird dann mittels geeigneter Formungsorgane, beispielsweise mittels an einer Blasform angeordneter Schieber, von außen um den Flanschrand 56 geformt. Es ist auch möglich, zunächst eine innenseitige Hinterschnittpartie in der Wandung 10 zu bilden und danach den Flanschrand 56 in die Hinterschnittpartie einzurasten. Der Flanschrand 56 weist weiterhin eine Mehrzahl stirnseitig überstehender Vorsprünge oder Rippen 58 auf, die bei der Montage des Trägeradapters 48 an einer noch fließweichen Wandung 10 in einer Blasform in das Material der Wandung 10 gepresst werden und zusammen ein Verdrehsicherungsorgan für den Trägeradapter 48 gegenüber der Wandung 10 bilden.

Der Träger 52 ist mittels kammartig ineinandergreifender Partien des Trägers 52 und des Trägeradapters 48, die von einem Achsbolzen 60 durchsetzt sind, drehbar am Trägeradapter 48 gelagert. Stirnseitig der Wandung 10 zugewandt trägt der Träger 52 einen Magneten 62, dessen Magnetfeld sich bei einer Drehung des Trägers 52 gegenüber dem Trägeradapter 48 hinsichtlich des Hallsensors verändert.

Der Sensoradapter 50 weist eine mit der Formgebung der Wandung 10 zusammenwirkende Haltepartie 64 auf, die in eine Hinterschnittpartie 66 der Wandung 10 eingreift, die bei der Schaffung einer Hinterschnittpartie 68 auf der Behälterinnenseite für den Trägeradapter 48 gebildet wird. Der Sensoradapter 50 weist eine Mehrzahl eine Zentralpartie zur Aufnahme eines Sensorträgers 70 mit der randseitigen Haltepartie 64 verbindende, elastische Verbindungsteile 72 auf. Diese sind federartig in Richtung der Wandung 10 vorgespannt und drücken die Zentralpartie des Sensoradapters gegen die Wandung 10, um den Abstand zwischen dem Hallsensor und dem Magnet 62 zu minimieren und konstant zu halten.

Der Sensoradapter 50 weist weiterhin einen sich radial nach außen erstreckenden Vorsprung 74 auf, der mit einer erhabenen Struktur 76 auf der Wandung 10 als Verdrehsicherungsorgan für den Sensoradapter 50 wirkt.

Auf dem Sensorträger 70 ist ein Hallsensor 78 und ein Elektronikmodul 80 angeordnet, und er weist eine Steckerbuchse 82 zum Anschluss von Signal- und Stromversorgungsleitungen auf. Der Sensorträger 70 und die Zentralpartie des Sensoradapters 50 weisen einen zusammenwirkenden Rastmechanismus auf, um den Sensorträger 70 unverlierbar, jedoch im Falle eines Defekts austauschbar, am Sensoradapter 50 zu befestigen.

## Patentansprüche

1. System mit einem Behälter, insbesondere Kunststoff-Kraftstoffbehälter, und einem Füllstandsgeber nach Anspruch 8, **dadurch gekennzeichnet, dass** der Hallsensor (78) an einem von der Außenseite des Behälters her montierbaren Sensorträger (70) angeordnet ist, wobei eine Wandung (10) des Behälters eine Befestigungskontur (66, 68) für einen behälterinnenseitig angeordneten Trägeradapter (48) für den Träger (52) des Hebelarms (54) des Schwimmkörpers und einen behälteraußenseitig angeordneten Sensoradapter (50) für den Sensorträger (70) aufweist, wobei der Trägeradapter (48) für den Träger (52) des Hebelarms (54) des Schwimmkörpers mit einer Randpartie (56) in einer Hinterschnittpartie (68) der Wandung (10) des Behälters angeordnet ist und wobei eine behälteraußenseitige Komplementärpartie (66) zu der Hinterschnittpartie (68) eine Rastkontur für eine Montagepartie (64) des Sensoradapters (50) bildet.

2. System nach Anspruch 1, **dadurch gekennzeichnet, dass** der Sensoradapter als Einlegeteil für eine Blasform ausgebildet ist und bei der Behälterformung umblasen wird.

3. System nach Anspruch 1 oder 2, **dadurch gekennzeichnet, dass** der Sensoradapter (50) ein mit einer an der Wandung (10) des Behälters angeordneten Struktur (76) zusammen wirkendes Verdrehsicherungsorgan (74) aufweist.

4. System nach einem der Ansprüche 1 bis 3, **dadurch gekennzeichnet, dass** der Trägeradapter (48) mindestens ein mit der Wandung (10) des Behälters zusammen wirkendes Verdrehsicherungselement (58) aufweist.

5. System nach Anspruch 4, **dadurch gekennzeichnet, dass** der Trägeradapter (48) eine Mehrzahl stirnseitig angeordneter Rippen (58) aufweist, die bei der Montage des Trägeradapters (48) an der Wandung (10) des Behälters in das noch fließweiche Material der Wandung (10) eingedrückt werden.

6. System nach einem der Ansprüche 1 bis 5, **dadurch gekennzeichnet, dass** der Sensoradapter (50) eine Zentralpartie zur Aufnahme des Sensorträgers (70) aufweist, die über eine Mehrzahl elastischer Verbindungsteile (72) mit der Montagepartie (64) verbunden ist.

7. System nach Anspruch 6, **dadurch gekennzeichnet, dass** die elastischen Verbindungsteile (72) die Zentralpartie des Sensoradapters (50) gegen die Wandung (10) des Behälters drücken.

8. Füllstandsgeber ausgeführt zum Einbau in den Behälter eines Systems nach einem der Ansprüche 1 bis 7, mit einem über einen Hebelarm (54) an einem drehbar gelagerten Träger (52) angeordneten Schwimmkörper und einem an dem Träger (52) angeordneten, bei einer durch den Schwimmkörper verursachten Drehung des Trägers (52) sich mit diesem drehenden Magnet (62) sowie einem in fester Lage gegenüber dem Magnet (62) angeordneten Hallsensor (78) zur Erfassung einer sich bei Drehung des Magnets (62) verändernden Feldstärke als Maß für den Füllstand in dem Behälter, **gekennzeichnet durch** einen behälterinnenseitig an einer Befestigungskontur (66, 68) einer Wandung (10) des Behälters anordenbaren Trägeradapter (48) für den Hebelarm (54) des Schwimmkörpers und einen behälteraußenseitig an der Wandung (10) des Behälters anordenbaren Sensoradapter (50) zur Aufnahme des Hallsensors (78), wobei der Trägeradapter (48) für den Träger (52) des Hebelarms (54) des Schwimmkörpers mit einer Randpartie (56) in einer Hinterschnittpartie (68) der Wandung (10) des Behälters anordenbar ist und wobei eine behälteraußenseitige Komplementärpartie (66) zu der Hinterschnittpartie (68) eine Rastkontur für eine Montagepartie (64) des Sensoradapters (50) bildet.

## Claims

1. System comprising a container, in particular a plastics fuel container, and a filling level indicator according to claim 8, **characterized in that** the Hall sensor (78) is arranged on a sensor support (70), which can be mounted from the outside of the container, a wall (10) of the container having a fastening contour (66, 68) for a support adapter (48), which is arranged on the inside of the container and is intended for the support (52) of the lever arm (54) of the floating body, and a sensor adapter (50), which is arranged on the outside of the container and is intended for the sensor support (70), an edge portion (56) of the support adapter (48) for the support (52) of the lever arm (54) of the floating body being arranged in an undercut portion (68) of the wall (10) of the container, and a complementary portion (66), on the outside of the container, to the undercut portion (68) forming a latching contour for a mounting portion (64) of the sensor adapter (50).

2. System according to claim 1, **characterized in that** the sensor adapter is designed as an insert for a blow mold, and is overmolded when the container is formed.

3. System according to either claim 1 or claim 2, **characterized in that** the sensor adapter (50) has an anti-rotation member (74) which interacts with a structure (76) arranged on the wall (10) of the container.

4. System according to any of claims 1 to 3, **characterized in that** the support adapter (48) has at least one anti-rotation element (58) which interacts with the wall (10) of the container.

5. System according to claim 4, **characterized in that** the support adapter (48) has a plurality of ribs (58) arranged on its end face, which, when the support adapter (48) is mounted on the wall (10) of the container, are pressed into the still soft-flowing material of the wall (10).

6. System according to any of claims 1 to 5, **characterized in that** the sensor adapter (50) has a central portion for receiving the sensor support (70), which central portion is connected to the mounting portion (64) via a plurality of resilient connecting parts (72).

7. System according to claim 6, **characterized in that** the resilient connecting parts (72) press the central portion of the sensor adapter (50) against the wall (10) of the container.

8. Filling level indicator designed for being installed in the container of a system according to any of claims 1 to 7, comprising a floating body arranged on a rotatably mounted support (52) via a lever arm (54), a magnet (62) which is arranged on the support (52) and which rotates together with the support (52) when said support rotates as a result of the floating body, and a Hall sensor (78) which is arranged in a fixed position relative to the magnet (62) and is intended for detecting a field strength, which changes when the magnet (62) rotates, as a measurement for the filling level in the container, **characterized by** a support adapter (48) for the lever arm (54) of the floating body, which can be arranged on the inside of the container on a fastening contour (66, 68) of a wall (10) of the container, and a sensor adapter (50), which can be arranged on the outside of the container on the wall (10) of the container and is intended for receiving the Hall sensor (78), it being possible for an edge portion (56) of the support adapter (48) for the support (52) of the lever arm (54) of the floating body to be arranged in an undercut portion (68) of the wall (10) of the container, and a complementary portion (66), on the outside of the container, to the undercut portion (68) forming a latching contour for a mounting portion (64) of the sensor adapter (50).

## Revendications

1. Système comportant un réservoir, en particulier un réservoir de carburant en matière plastique, et un capteur de niveau selon la revendication 8, **caractérisé en ce que** le capteur Hall (78) est disposé sur un support de capteur (70) qui peut être monté depuis le côté extérieur du réservoir, dans lequel une paroi (10) du réservoir présente un contour de fixation (66, 68) pour un adaptateur de support (48) disposé côté intérieur du réservoir pour le support (52) du bras de levier (54) du corps flottant et un adaptateur de capteur (50) disposé côté extérieur du réservoir pour le support de capteur (70), dans lequel l'adaptateur de support (48) est disposé avec une partie de bord (56) dans une partie en contre-dépouille (68) de la paroi (10) du réservoir pour le support (52) du bras de levier (54) du corps flottant et dans lequel une partie complémentaire (66), côté extérieur du réservoir, à la partie en contre-dépouille (68) forme un contour d'encliquetage pour une partie de montage (64) de l'adaptateur de capteur (50).

2. Système selon la revendication 1, **caractérisé en ce que** l'adaptateur de capteur est conçu comme une pièce d'insertion pour un moule de soufflage et est soufflé lors du moulage de réservoir.

3. Système selon la revendication 1 ou 2, **caractérisé en ce que** l'adaptateur de capteur (50) présente un organe anti-rotation (74) qui coopère avec une structure (76) disposée sur la paroi (10) du réservoir.

4. Système selon l'une des revendications 1 à 3, **caractérisé en ce que** l'adaptateur de support (48) présente au moins un élément anti-rotation (58) qui coopère avec la paroi (10) du réservoir.

5. Système selon la revendication 4, **caractérisé en ce que** l'adaptateur de support (48) présente une pluralité de nervures (58) disposées sur la face frontale, lesquelles, lorsque l'adaptateur de support (48) est monté sur la paroi (10) du réservoir, sont enfoncées dans le matériau encore fluide de la paroi (10).

6. Système selon l'une des revendications 1 à 5, **caractérisé en ce que** l'adaptateur de capteur (50) présente une partie centrale permettant de recevoir le support de capteur (70), laquelle est reliée à la pièce de montage (64) par l'intermédiaire d'une pluralité de pièces de liaison élastiques (72).

7. Système selon la revendication 6, **caractérisé en ce que** les pièces de liaison élastiques (72) pressent la partie centrale de l'adaptateur de capteur (50) contre la paroi (10) du réservoir.

8. Capteur de niveau conçu pour être installé dans le réservoir d'un système selon l'une des revendications 1 à 7, comportant un corps flottant disposé sur un support (52) monté rotatif par l'intermédiaire d'un bras de levier (54) et un aimant (62) disposé sur le support (52) et tournant avec celui-ci lors d'une rotation du support (52) provoquée par le corps flottant, ainsi qu'un capteur Hall (78) disposé dans une position fixe en face de l'aimant (62), permettant de détecter une intensité de champ comme mesure pour le niveau dans le réservoir, laquelle intensité de champ change lorsque l'aimant (62) tourne, **caractérisé par** un adaptateur de support (48) pour le bras de levier (54) du corps flottant pouvant être disposé côté intérieur du réservoir sur un contour de fixation (66, 68) d'une paroi (10) du réservoir, et un adaptateur de capteur (50) permettant de recevoir le capteur Hall (78) pouvant être disposé côté extérieur du réservoir sur la paroi (10) du réservoir, dans lequel l'adaptateur de support (48) pour le support (52) du bras de levier (54) du corps flottant peut être disposé avec une partie de bord (56) dans une partie en contre-dépouille (68) de la paroi (10) du réservoir, et dans lequel une partie complémentaire (66), côté extérieur du réservoir, à la partie en contre-dépouille (68) forme un contour d'encliquetage pour une partie de montage (64) de l'adaptateur de capteur (50).
